# EUROPEAN PATENT SPECIFICATION

(11) **EP 3 941 218 B1**
(45) Date of publication and mention of the grant of the patent: **06.12.2023**
(21) Application number: 20776637.9
(22) Date of filing: 19.03.2020
(51) Int. Cl.: A23L 29/262, A23L 29/269, A23L 29/294, A23L 29/30, A23L 29/00, A23L 33/16, A23L 33/125, A23L 2/52

(54) **A PROCESS FOR PREPARING A READILY DISPERSIBLE HYDROCOLLOID COMPOSITION**
VERFAHREN ZUR HERSTELLUNG EINER LEICHT DISPERGIERBAREN HYDROKOLLOIDZUSAMMENSETZUNG
PROCÉDÉ DE PRÉPARATION D'UNE COMPOSITION HYDROCOLLOÏDE FACILEMENT DISPERSIBLE

(30) Priority: 22.03.2019 JP 2019055510
(43) Date of publication of application: 26.01.2022
(73) Proprietor: DuPont Nutrition Biosciences ApS, 1411 Køpenhaven K (DK)
(72) Inventor: SWORN Graham, 75017 Paris (FR); YOUNG Niall, 1411 Copenhagen K (DK); FALCK Karen, 1411 Copenhagen K (DK); SNABE Torben, 1411 Copenhagen K (DK); INOUE Motoki, Hachioji-shi, Tokyo 192-0919 (JP); TOYAMA Yoshio, Hachioji-shi, Tokyo 192-0919 (JP)
(74) Representative: International N&H EMEA
(86) International application number: PCT/JP2020/012465
(87) International publication number: WO 2020/196324

(56) References cited:
- EP-A1- 3 266 315
- WO-A1-2013/135737
- WO-A2-2007/041395

## Description

This application is based upon and claims the benefit of priority from Japanese Patent Application No. 2019-055510, filed on March 22, 2019.

### FIELD OF THE INVENTION

The present invention relates to a process for preparing a readily dispersible hydrocolloid composition and to the use of the composition prepared by the process in the management of dysphagia.

### BACKGROUND OF THE INVENTION

Dysphagia is a condition resulting from a disorder in the mechanics of swallowing, which can lead to impairment in the safety, efficiency or quality of eating and drinking. Dysphagia can be caused by many disorders including neurological disorders such as stroke, traumatic brain injury, Huntington's disease, multiple sclerosis, Parkinson's disease and cerebral palsy. Many of these conditions are associated with the elderly and, with the continuing demographic shift, dysphagia is a growing problem.

The use of food and liquids with modified texture or rheology is an established clinical practice to address dysphagia. The practice has been based on the assumption that modifying the rheology of normal foods and liquids makes them easier and safer to swallow. It is commonly accepted that thin liquids such as water, tea, coffee, squash and juice flow quickly in the mouth during the swallowing process and can cause aspiration. Aspiration is the entry of foods or liquids into the airway and often manifests as coughing or choking during swallowing. This can lead to a reluctance to eat or drink with the subsequent risk of malnutrition or dehydration. In the longer term, if not controlled, aspiration can lead to complications with the respiratory system such as chronic obstructive pulmonary disease or aspiration pneumonia. The general practice is to increase the viscosity of the liquid to decrease the risk.

A class of thickeners that are used in products for managing dysphagia are hydrocolloids. Hydrocolloids are frequently provided by manufacturers in the form of a dry granulate and can be difficult to disperse in water and other liquids as they tend to lump during hydration. The physico-chemical basis for lumping of hydrocolloids during hydration and dispersion is surface-to-surface cross-linking and/or gelling of polymer molecules at the surfaces of the hydrocolloid granules. At this stage, hydrated polymer molecules at the granule surface are fully or partially ejected from the surface. This gives a high concentration of hydrated polymers at or in the vicinity of the granule surfaces. When granules are added to a liquid/water, thousands of particles are present in a small volume, each of which is surrounded by a liquid "cloud" with a high local polymer concentration that can potentially cross-link and form gels between granules which will then get sticky and lump together. The formation of lumps slows the overall dissolution process as a result of limited access of the liquid to the interior of the lump. JPH10251446 A discloses blending carboxymethylcellulose, fine cellulose xanthan gum and maltodextrin, forming a dispersion and spray-drying to a water-dispersible composite dry powder.

There is a need to develop a hydrocolloid-based thickener composition for the management of dysphagia with improved dispersibility in water or aqueous liquids to allow for ready hydration and solubilisation.

### SUMMARY OF THE INVENTION

In the course of developing a hydrocolloid-based product with improved rheological properties for the management of dysphagia, the present inventors have developed a process to combine xanthan gum and carboxymethyl cellulose in a composition which does not lump when dispersed in water and which does not require intense agitation to disperse, but can be stirred with a spoon by the end user (such as a patient with dysphagia or a carer).

Accordingly, the present invention relates to a process for preparing a readily dispersible hydrocolloid composition, the process comprising
(a) providing a dry blend of xanthan gum, carboxymethyl cellulose and maltodextrin in the form of a powder;
(b) contacting the dry blend of step (a) with a solution of a calcium salt to provide a first agglomerate;
(c) contacting the first agglomerate of step (b) with a solution of maltodextrin to provide a second agglomerate; and
(d) recovering the second agglomerate.

In another aspect, the invention relates to the readily dispersible hydrocolloid composition prepared by the process.

In a further aspect, the invention relates to the readily dispersible hydrocolloid composition for use in the management of dysphagia.

### Brief Description of Drawings

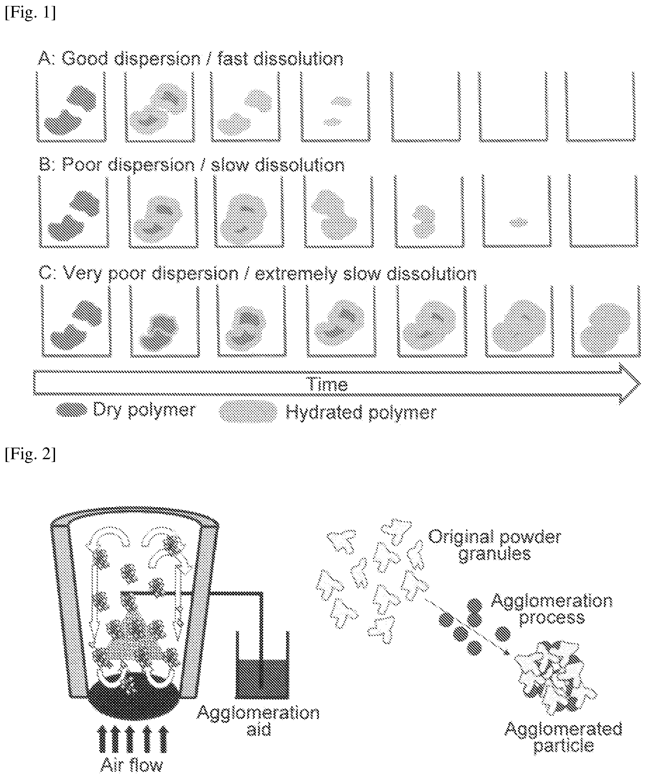

[fig.1]Fig. 1 is a schematic illustration of powder granules during hydration with good dispersion and fast dissolution (A); poor dispersion and slow dissolution (B) and very poor dispersion and extremely slow dissolution (C). Ready dispersibility is shown as rapid hydration and dissolution of separated granules, while poor or very poor dispersibility is shown as slow hydration of the granules.
[fig.2]Fig. 2 is a schematic illustration of the agglomeration of hydrocolloid granules (shown as irregular in shape) and binder ingredient (shown as round in shape) in a simplified fluid bed process where poorly dispersible hydrocolloid granules are sprayed with a solution of a binder ingredient whereby the hydrocolloid granules are bound together in larger agglomerated particles.

### DETAILED DESCRIPTION OF THE INVENTION

### Definitions

In the present context, the term "hydrocolloid" is intended to indicate a hydrophilic substance capable of forming a colloidal dispersion of finely divided particles in a liquid, in particular water. The colloidal particles bind water by hydrogen bonds. Examples of hydrocolloids are biopolymers such as alginate, carrageenan, pectin, cellulose derivatives such as carboxymethyl cellulose, xanthan gum, succinoglycans, gellan, guar gum, locust bean gum and starches. Preferred hydrocolloids are cellulose derivatives or xanthan gum. In the present context, "hydrocolloid" is used collectively to indicate xanthan gum and carboxymethyl cellulose. A "hydrocolloid composition" is a composition comprising particles of a hydrocolloid.

The term "readily dispersible" or "ready dispersibility" is intended to indicate the ability of agglomerated particles of the hydrocolloid composition to be immersed and flow as free single particles in water or an aqueous liquid without lumping or aggregating, shortly after which the particles will hydrate completely and eventually dissolve, cf. Fig. 1A. Preferably, the dispersion of the particles can be effected without application of high shear forces, e.g. by stirring with a spoon, and lump-free dispersal is effected within a period of less than one minute of stirring.

The term "agglomerate" is intended to indicate particles composed of multiple granules of hydrocolloid(s) and one or more easily dispersible or water-soluble ingredients which act as a binder sticking the hydrocolloid granules together, cf. Fig. 2. Upon hydration, the easily dispersible ingredient(s) dissolve and the hydrocolloid granules are separated, primarily as a result of disturbances and liquid diffusion in the liquid microenvironment around and within the agglomerates.

The term "xanthan gum" is intended to indicate a polysaccharide produced by fermentation of the microorganism Xanthomonas campestris. Examples of commercially available xanthan gum are GRINDSTED Xanthan Clear80 (available from DuPont), GRINDSTED Xanthan MAS-SH (available from DuPont), SAN ACE (available from San-Ei Gen FFI Co.), KELTROL (available from CP Kelco) and ECHO GUM (available from DSP Gokyo Food & Chemical Co.).

The term "carboxymethyl cellulose" (abbreviated herein to "CMC") is intended to indicate a cellulose derivative prepared by substituting hydrogen in some of the hydroxy groups on the anhydroglucose unit of the cellulose polymer with carboxymethyl groups (-CH₂-COOH). Examples of commercially available carboxymethyl celluloses include GRINDSTED BEV130 available from DuPont), GRINDSTED BEV150 (available from DuPont), GRINDSTED BEV 350 (available from DuPont) and WALOCEL C (available from Dow Chemical Co.).

### Embodiments

It has surprisingly been found that a two-step agglomeration process is capable of providing a readily dispersible hydrocolloid composition in the form of a powder.

In step (a) of the process, granular xanthan gum and CMC are dry-blended with maltodextrin powder. Maltodextrin is a water-soluble sugar which is easily dispersed in water and provides dilution and physical separation of the xanthan gum and CMC granules. The concentration of maltodextrin in the dry blend of step (a) is favourably in the range of 40-90% by dry weight, preferably 50-80% by dry weight.

It is the aim of the present process to provide a readily dispersible hydrocolloid composition which has a rheology that is suitable for the management of dysphagia which provides thickness to foods and drinks and improves swallowability of foods and drinks. In order to prevent aspiration, efforts are made to thicken smooth liquids for people with dysphagia. The degree of such thickening varies depending on the severity of the dysphagia of the individual patient, and specialists such as doctors, speech therapists (ST), nutritionists, or the like are required to adjust the thickening in accordance with the behaviour of the individual patients. The hydrated composition should show the following features:

It should exhibit non-Newtonian flow behaviour. It should show a relatively higher viscosity at lower shear rate as this will increase the residence time on the tongue.

It should exhibit a lower viscosity at a shear rate of 50-100 s⁻¹ while flowing in the pharyngeal walls but still be sufficient to reduce the risk of aspiration when the liquid flows around the epiglottis.

It has generally been found possible to achieve a desired viscosity when the ratio of xanthan gum to carboxymethyl cellulose in step (a) is between 90:10 and 30:70, preferably between 85:15 and 40:60, more preferably between 80:20 and 50:50.

The total concentration of the two hydrocolloids in the dry blend of step (a) is favourably in the range of 10-60% by weight, preferably 20-50% by weight, of the dry blend.

The two-step agglomeration takes place in steps (b) and (c) of the present process. Agglomeration is a process where easily dispersible ingredients are added to the hydrocolloid granules and where, at the same time, the particle size is increased, which will typically also improve the dispersibility and reduce lumping. The enlarged particles are composed of multiple granules of the two hydrocolloids physically bound together with the easily dispersed binder ingredient (such as maltodextrin). Upon hydration and dissolution, the binder dissolves and separates the hydrocolloid granules, primarily as a result of disturbances and liquid diffusion in the liquid microenvironment around and within the agglomerates. Superior dispersibility has been found for those hydrocolloid compositions that have been prepared by a two-step agglomeration process as opposed to compositions prepared by a process where the solutions of calcium salt and maltodextrin are applied simultaneously, cf. Example 1 compared to Example 4.

In the present process, the agglomeration may be performed by spraying an aqueous solution of an easily dispersible ingredient onto the dry blend of the hydrocolloids and maltodextrin in a fluid bed (in particular a moving fluidized bed). The spray rate should be balanced with the drying rate and the shear in the equipment used and, in combination, these parameters control the size growth of the agglomerates. It will be readily apparent to the person skilled in the art that each of the process parameters may be adjusted to the equipment used in the process. In step (b) of the present process, the aqueous solution contains a calcium salt. It is currently believed that the presence of calcium delays hydration and consequently the stickiness of the hydrocolloids and therefore allows the hydrocolloid granules to disperse into water before they become sticky and disposed to form lumps. Examples of suitable calcium salts are calcium lactate, calcium propionate, calcium citrate and calcium chloride. It is preferred to include the calcium salt in a concentration that is close to the solubility limit of that particular calcium salt in question as this permits the spraying time to be reduced. A currently preferred calcium salt is calcium lactate in terms of resulting in the desired dispersibility of the hydrocolloid composition. The concentration of calcium lactate in the aqueous solution of step (b) may be, for example, up to 10%, preferably up to 9.1%, more preferably from 5 % to 9.1%, for calcium lactate anhydrate and, for example, up to 15%, preferably up to 12.8%, more preferably from 5 % to 12.8%, for calcium lactate, 5 H₂O. Another calcium salt, calcium propionate, may be included in the aqueous solution of step (b) in a concentration of up to 15%. The concentration of the calcium salt in the final composition is typically in the range of 1-10% by dry weight of the composition, preferably in the range of 1-5% by dry weight of the composition.

In step (c) of the present process, the liquid solution sprayed onto the agglomerated particles prepared in step (b) comprises preferably maltodextrin, more preferably maltodextrin in a concentration close to the solubility limit of that particular grade of maltodextrin. Maltodextrin is available in different grades expressed as dextrose equivalents (DE) between 3 and 20. The higher the DE value, the shorter is the glucose chain and the higher the solubility. For instance, when the maltodextrin is maltodextrin with a DE value of 6, it may be included in the aqueous solution of step (c) in a concentration of 33.3%. The concentration of maltodextrin added to the composition in step (c) may be in the range of 2-20% by dry weight of the composition. The subsequent agglomeration with the maltodextrin solution is considered to be required to build and strengthen the agglomerates because the calcium salt is a poor binder and, if used alone, results in small and weak agglomerates, while maltodextrin provides stickiness and leads to stronger and larger agglomerates being formed in the process.

The agglomerated particles may be recovered by discharging them from the fluid bed. The particles typically have a particle size where 20-80% of the particles have a particle size of 200 µm or more, and at least 90% of the particles have a particle size of more than 50 µm. The particle size may be determined on a Malvern Mastersizer 3000 using Mie scattering model

The resulting hydrocolloid composition is readily dispersible in water or an aqueous liquid. Dispersibility may be determined by placing a glass beaker (Φ 4 cm, provided with a 3 cm stirrer magnet) containing 100 ml model tap water (deionized water containing 0.025% by weight NaCl) on a magnetic stirrer. Then, 2 g of the agglomerated particles are poured into the glass beaker and the magnetic stirrer is turned on 2 seconds later. Stirring at 600 rpm is maintained for 10 seconds after which the magnetic stirrer is turned off. The degree of occurrence of lumps is assessed visually. The samples are rated from 1 to 5, where 1 means the appearance of very large poorly hydrated lumps, 2 means the appearance of large and medium-sized lumps, both well and poorly hydrated, 3 means the appearance of medium-sized and small lumps, both well and poorly hydrated, 4 means the appearance of a few small, well-hydrated lumps that dissolve within a few minutes, and 5 means that no lumps are present. A dispersibility of 3 is considered acceptable, while a dispersibility of 4 or 5 is preferred.

The hydrocolloid composition has a viscosity of 100-400 mPa.s at a shear rate of 50 s⁻¹ when determined as a 2% by weight sample of the agglomerated particles in water. The viscosity range has been found to be effective for the management of dysphagia. The viscosity may be determined as follows:
Samples are prepared by slowly adding agglomerated particles to tap water in a beaker.

The samples are stirred at 500 rpm for 30 min. and then removed from the stirrer and a magnetic bar is added and the sample is stirred overnight.

The sample is left for at least 5 minutes without stirring before measuring flow curves (0.001 s⁻¹ to 1000 s⁻¹ at 20_{°}C) in a MCR501 rheometer (Anton Paar).

The agglomerated particles preferably have a bulk density of 20-50 g/100 ml when measured gravimetrically in a 100 ml glass cylinder (Φ ~4 cm).

For use in the management of dysphagia, 1-3% by weight of the hydrocolloid composition comprising 20-50% by weight of hydrocolloids and 50-80% by weight of maltodextrin may suitably be dispersed in cold tap water immediately followed by stirring with a spoon to provide the desired viscosity. The present hydrocolloid composition may similarly be added to hot beverages such as tea, coffee, broth etc. in a suitable concentration to provide the desired viscosity.

According to another embodiment of the present invention, a use of a readily dispersible hydrocolloid composition, in the manufacture of a composition for management of dysphagia, is provided.

According to another embodiment of the present invention, a use of a readily dispersible hydrocolloid composition, in the manufacture of a composition for providing thickness to foods and drinks and improving swallowability of foods and drinks, is provided.

According to another embodiment of the present invention, a readily dispersible hydrocolloid composition for providing thickness to foods and drinks and improving swallowability of foods and drinks, is provided.

According to another embodiment of the present invention, a use of a readily dispersible hydrocolloid composition for management of dysphagia, is provided. According to one preferred embodiment of the present invention, the use of the present invention is non-therapeutic use.

According to another embodiment of the present invention, a use of a readily dispersible hydrocolloid composition for providing thickness to foods and drinks and improving swallowability of foods and drinks, is provided.

According to another embodiment of the present invention, a method for providing thickness to foods and drinks and improving swallowability of foods and drinks, comprising adding a readily dispersible hydrocolloid composition to the foods and drinks, is provided.

According to another embodiment of the present invention, a method for managing dysphagia, comprising allowing a person with dysphagia to ingest the foods and drinks added a readily dispersible hydrocolloid composition, is provided. Here, according to another preferred embodiment of the present invention, the method excludes medical interventions for humans.

The embodiment of the use, composition and method, as mentioned above can be performed in accordance with the description on the readily dispersible hydrocolloid composition and process for preparing the same of the present invention.

The invention is described in further detail in the following examples which are not in any way intended to limit the scope of the invention as claimed.

### EXAMPLES

### Example 1: Two-step agglomeration process

Prototypes were prepared at a batch size of 1000 g in a pilot scale fluid bed (Aeromatic Fielder MP1) with top spray, using a two-fluid nozzle (Schlick 970-S4) with a 1.0 mm liquid pipe.

300 g of the hydrocolloids (xanthan gum MAS-SH and CMC BEV 150, 50:50, both available from DuPont) was dry blended with 572 g of maltodextrin DE6 (Glucidex 6 IT, available from Roquette). Binder solutions were prepared by mixing calcium lactate or maltodextrin, respectively, into 80_{°}C preboiled deionized water after which the solutions were maintained at 65_{°}C throughout the subsequent spraying process.

The fluid bed was pre-heated with process air at 70_{°}C to an exhaust temperature of 27-32_{°}C. The fluid bed was then charged with the dry blend of hydrocolloids and maltodextrin. When sufficient fluidization of the product bed was observed at 25 m³/h (1 minute), the agglomeration process was initiated by spraying 300 g of a first binder solution containing 9.1% by weight of calcium lactate anhydrate or12.8% by weight of calcium lactate, 5 H₂O in of water onto the dry blend. After the first binder solution had been sprayed onto the dry blend of hydrocolloids and maltodextrin to form the first agglomerate (for about 30-45 minutes), the second binder solution (100 g of maltodextrin dissolved in 200 g of water) was sprayed onto the first agglomerate for 30-45 minutes to form the second agglomerate.

In both agglomeration steps, the spray air had a pressure of 1.8 bar and a temperature of 45_{°}C. The fluidizing air temperature was constant at 70_{°}C throughout the entire agglomeration process. The fluidizing process air flow was increased from 25 m³ /h to 50 m³/h within the first 15 minutes of the process and maintained at 50 m³/h for the remainder of the process.

When all of the second binder solution has been added, the second agglomerate was immediately discharged from the fluid bed via the sampling hole in a Φ 20mm tube using a custom-made vacuum system. The discharge was carried out while the agglomerate was fluidizing to avoid fines from the internal filter to drop into the agglomerate.

The resulting agglomerate had a bulk density of 25 g/100 ml and a dispersibility of 4 (as determined by the magnetic stirrer method described above).

### Example 2: Two-step agglomeration process

An agglomerate containing the hydrocolloids xanthan gum MAS-SH and CMC BEV150 and maltodextrin was prepared as described in example 1 with the exception that the amount of aqueous solution was reduced to 150 g.

The resulting agglomerate had a bulk density of 19 g/100 ml and a dispersibility of 4 (as determined by the magnetic stirrer method described above).

### Example 3: Two-step agglomeration process

An agglomerate containing the hydrocolloids xanthan gum MAS-SH and CMC BEV150 and maltodextrin was prepared as described in example 1 with the exception that the first binder solution contained 15% by weight of calcium propionate in 200 g of water.

The resulting agglomerate had a dispersibility of 4 (as determined by the magnetic stirrer method described above).

### Example 4 (comparative): One-step agglomeration process

An agglomerate containing the hydrocolloids xanthan gum MAS-SH and CMC BEV150 and maltodextrin was prepared as described in example 1 with the exception that 9.1% by weight calcium lactate anhydrate or 12.8% by weight of calcium lactate, 5 H₂O) and 50 g of maltodextrin was dissolved in 300 g of water and applied as a single binder solution.

The resulting agglomerate had a bulk density of 23.9 g/100 ml and a dispersibility of 2 (as determined by the magnetic stirrer method described above).

### Example 5 (comparative): One-step agglomeration process

An agglomerate containing xanthan gum MAS-SH and CMC BEV150 blended with maltodextrin was prepared as described above with the exception that only one binder solution containing 100 g of maltodextrin in 200 g of water was applied.

The resulting agglomerate has a dispersibility of 3 (as determined by the magnetic stirrer method described above).

### Example 6: Two-step agglomeration process

45 kg of the hydrocolloids (xanthan gum MAS-SH and CMC BEV150, 50:50) was dry blended with 85.73 kg of maltodextrin PINE-DEX #2AG (available from Matsutani Chemical Industry Co., Ltd.). 45 kg of a 12.8% w/w solution of calcium lactate, 5 H₂O, was prepared as the first binder solution, and 45 kg of a 30% w/w maltodextrin solution was prepared as the second binder solution.

The agglomeration process was carried out under the following parameters:
Inlet air temperature: 70_{°}C
Outlet air temperature: 45-50_{°}C
Spray rate during calcium lactate addition: 0.55-0.67 kg/min (33-40 kg/h)
Spray rate during maltodextrin addition: 0.95 kg/min (57 kg/h)

After the full amount of calcium spray solution and then maltodextrin solution had been applied, post-drying was performed for about 5 minutes.

After opening the fluid bed for discharging, a layer of fines on top of the product bed was scraped away, and samples were taken for dispersibility testing. The resulting agglomerate had a dispersibility of 5 (as determined by the magnetic stirrer method described above).

### Example 7: Two-step agglomeration process using different grades of CMC

Prototypes were prepared at a batch size of 1000 g in a pilot scale fluid bed (Aeromatic Fielder MP1) with top spray, using a two-fluid nozzle (Schlick 970-S4) with a 1.0 mm liquid pipe.

400 g of a 50:50 blend of the hydrocolloids (xanthan gum MAS-SH and one of the carboxymethyl celluloses: CMC BEV 150, available from DuPont; Blanose 7H3SF, available from Ashland; Walocel CRT 20000PA, available from the Dow Chemical Company) was dry blended with 498 g of maltodextrin DE20. Binder solutions were prepared by mixing calcium lactate or maltodextrin, respectively, into 80_{°}C preboiled deionized water after which the solutions were maintained at 65_{°}C throughout the subsequent spraying process.

The fluid bed was pre-heated with process air at 70_{°}C to an exhaust temperature of 27-32_{°}C. The fluid bed was then charged with the dry blend of hydrocolloids and maltodextrin. When sufficient fluidization of the product bed was observed at 25 m³/h (1 minute), the agglomeration process was initiated by spraying 240 g of a first binder solution containing 9.1% by weight of calcium lactate anhydrate or12.8% by weight of calcium lactate, 5 H₂O in water onto the dry blend. After the first binder solution had been sprayed onto blend of hydrocolloids and maltodextrin to form the first agglomerate (for about 30-45 minutes), the second binder solution (240 g of a 33.3% maltodextrin solution in water) was sprayed onto the first agglomerate for 30-45 minutes to form the second agglomerate.

In both agglomeration steps, the spray air had a pressure of 1.8 bar and a temperature of 45_{°}C. The fluidizing air temperature was constant at 70_{°}C throughout the entire agglomeration process. The fluidizing process air flow was increased from 25 m³ /h to 50 m³/h within the first 15 minutes of the process and maintained at 50 m³/h for the duration of spraying the first binder solution. Fluidization air flow was increased to 60 m³/h for spraying the second binder solution.

When all of the second binder solution has been added, the second agglomerate was immediately discharged from the fluid bed via the sampling hole in a Φ 20mm tube using a custom-made vacuum system. The discharge was carried out while the agglomerate was fluidizing to avoid fines from the internal filter to drop into the agglomerate.

The resulting agglomerate that included CMC BEV150 had a bulk density of 40 g/100 ml and a dispersibility of 4 (as determined by the magnetic stirrer method described above); the agglomerate that included Blanose 7H3SF had a bulk density of 50 g/100 ml and a dispersibility of 4 (as determined by the magnetic stirrer method described above); and the agglomerate that included Walocel CRT20000PA had a bulk density of 44 g/100 ml and a dispersibility of 3 (as determined by the magnetic stirrer method described above).

## Claims

1. A process for preparing a readily dispersible hydrocolloid composition, the process comprising
(a) providing a dry blend of xanthan gum, carboxymethyl cellulose and maltodextrin in the form of a powder;
(b) contacting the dry blend of step (a) with a solution of a calcium salt to provide a first agglomerate;
(c) contacting the first agglomerate of step (b) with a solution of maltodextrin to provide a second agglomerate; and
(d) recovering the second agglomerate.

2. The process according to claim 1, wherein the agglomeration step (b) is carried out by spraying a solution of calcium salt onto the dry blend provided in step (a) in a fluid bed.

3. The process according to claim 1 or 2, wherein the agglomeration step (c) is carried out by spraying a solution of maltodextrin onto the agglomerate of step (b) in a fluid bed.

4. The process according to any one of claims 1-3, wherein the ratio of xanthan gum to carboxymethyl cellulose in step (a) is between 90:10 and 30:70, preferably between 85:15 and 40:60, more preferably 80:20 and 50:50.

5. The process according to any one of claims 1-4, wherein the concentration of xanthan gum and carboxymethyl cellulose in step (a) is 10-60%, preferably 20-50%, by dry weight of the composition.

6. The process according to any one of claims 1-5, wherein the concentration of maltodextrin in step (a) is 40-90%, preferably 50-80%, by dry weight of the composition.

7. The process according to any one of claims 1-6, wherein the concentration of the calcium salt in step (b) is 1-10% by dry weight of the composition.

8. The process according to any one of claims 1-7, wherein the calcium salt is selected from the group consisting of calcium lactate, calcium propionate, calcium citrate and calcium chloride, preferably calcium lactate.

9. A process according to any one of claims 1-8, wherein the concentration of maltodextrin in step (c) is 2-20% by dry weight of the composition.

10. A process according to any one of claims 1-9, wherein 20-80 % of the agglomerated particles recovered in step (d) have a particle size above 200 µm, and wherein at least 90% of the agglomerated particles of step (d) have a particle size above 50 µm.

11. A readily dispersable hydrocolloid composition prepared by the process of any one of claims 1-10.

12. The composition according to claim 11, wherein a 2% w/w sample of the agglomerated particles in water has a viscosity of 100-400 mPa.s at a shear rate of 50 s⁻ at 20°C.

13. The composition according to claim 11 or 12, wherein the agglomerated particles have a dispersibility of 3 or more when determined by a method involving stirring a 2% sample of the agglomerated particles in water using a magnetic stirrer at 600 rpm for 10 seconds and visually assessing the degree of occurrence of lumps in the water.

14. The composition according to any one of claims 11-13, wherein the agglomerated particles have a bulk density of 20-50 g/100 ml.

15. The composition according to any one of claims 11-14 for use in the management of dysphagia.

## Patentansprüche

1. Verfahren zur Herstellung einer leicht dispergierbaren Hydrokolloidzusammensetzung, wobei das Verfahren umfasst:
(a) Bereitstellen eines trockenen Gemischs von Xanthangummi, Carboxymethylcellulose und Maltodextrin in der Form eines Pulvers;
(b) Inkontaktbringen des trockenen Gemischs von Schritt (a) mit einer Lösung eines Calciumsalzes, um ein erstes Agglomerat bereitzustellen;
(c) Inkontaktbringen des ersten Agglomerats von Schritt (b) mit einer Lösung von Maltodextrin, um ein zweites Agglomerat bereitzustellen; und
(d) Gewinnen des zweiten Agglomerats.

2. Verfahren gemäß Anspruch 1, wobei der Agglomerationsschritt (b) durch Sprühen einer Lösung von Calciumsalz auf das bei Schritt (a) bereitgestellte trockene Gemisch in einer Wirbelschicht durchgeführt wird.

3. Verfahren gemäß Anspruch 1 oder 2, wobei der Agglomerationsschritt (c) durch Sprühen einer Lösung von Maltodextrin auf das Agglomerat von Schritt (b) in einer Wirbelschicht durchgeführt wird.

4. Verfahren gemäß einem der Ansprüche 1-3, wobei das Verhältnis von Xanthangummi zu Carboxymethylcellulose bei Schritt (a) zwischen 90:10 und 30:70, vorzugsweise zwischen 85:15 und 40:60, bevorzugter 80:20 bis 50:50, beträgt.

5. Verfahren gemäß einem der Ansprüche 1-4, wobei die Konzentration von Xanthangummi und Carboxymethylcellulose bei Schritt (a) 10-60 %, vorzugsweise 20-50 %, nach Trockengewicht der Zusammensetzung beträgt.

6. Verfahren gemäß einem der Ansprüche 1-5, wobei die Konzentration von Maltodextrin bei Schritt (a) 40-90 %, vorzugsweise 50-80 %, nach Trockengewicht der Zusammensetzung beträgt.

7. Verfahren gemäß einem der Ansprüche 1-6, wobei die Konzentration des Calciumsalzes bei Schritt (b) 1-10 % nach Trockengewicht der Zusammensetzung beträgt.

8. Verfahren gemäß einem der Ansprüche 1-7, wobei das Calciumsalz ausgewählt ist aus der Gruppe bestehend aus Calciumlactat, Calciumpropionat, Calciumcitrat und Calciumchlorid, vorzugsweise Calciumlactat.

9. Verfahren gemäß einem der Ansprüche 1-8, wobei die Konzentration von Maltodextrin bei Schritt (c) 2-20 % nach Trockengewicht der Zusammensetzung beträgt.

10. Verfahren gemäß einem der Ansprüche 1-9, wobei 20-80 % der bei Schritt (d) gewonnenen agglomerierten Partikel eine Partikelgröße von über 200 µm aufweisen und wobei wenigstens 90 % der agglomerierten Partikel von Schritt (d) eine Partikelgröße von über 50 µm aufweisen.

11. Leicht dispergierbare Hydrokolloidzusammensetzung, hergestellt durch das Verfahren gemäß einem der Ansprüche 1-10.

12. Zusammensetzung gemäß Anspruch 11, wobei eine Probe von 2 % Gew./Gew. der agglomerierten Partikel in Wasser eine Viskosität von 100-400 mPa.s bei einer Scherrate von 50 s⁻¹ bei 20 °C aufweist.

13. Zusammensetzung gemäß Anspruch 11 oder 12, wobei die agglomerierten Partikel eine Dispergierbarkeit von 3 oder mehr aufweisen, wenn bestimmt durch ein Verfahren mit Rühren einer 2-%-Probe der agglomerierten Partikel in Wasser unter Verwendung eines Magnetrührers bei 600 Upm für 10 Sekunden und visueller Beurteilung des Grads des Auftretens von Klumpen in dem Wasser.

14. Zusammensetzung gemäß einem der Ansprüche 11-13, wobei die agglomerierten Partikel eine Schüttdichte von 20-50 g/100 ml aufweisen.

15. Zusammensetzung gemäß einem der Ansprüche 11-14 zur Verwendung bei dem Management von Dysphagie.

## Revendications

1. Procédé pour la préparation d'une composition d'hydrocolloïde facilement dispersible, le procédé comprenant
(a) la fourniture d'un mélange sec de gomme xanthane, de carboxyméthylcellulose et de maltodextrine sous la forme d'une poudre ;
(b) la mise en contact du mélange sec de l'étape (a) avec une solution d'un sel de calcium pour fournir un premier agglomérat ;
(c) la mise en contact du premier agglomérat de l'étape (b) avec une solution de maltodextrine pour fournir un deuxième agglomérat ; et
(d) la récupération du deuxième agglomérat.

2. Procédé selon la revendication 1, l'étape d'agglomération (b) étant mise en œuvre par pulvérisation d'une solution d'un sel de calcium sur le mélange sec fourni dans l'étape (a) dans un lit fluide.

3. Procédé selon la revendication 1 ou 2, l'étape d'agglomération (c) étant mise en œuvre par pulvérisation d'une solution de maltodextrine sur l'agglomérat de l'étape (b) dans un lit fluide.

4. Procédé selon l'une quelconque des revendications 1 à 3, le rapport de gomme xanthane sur carboxyméthylcellulose dans l'étape (a) étant compris entre 90 : 10 et 30 : 70, préférablement entre 85 : 15 et 40 : 60, plus préférablement entre 80 : 20 et 50 : 50.

5. Procédé selon l'une quelconque des revendications 1 à 4, la concentration de gomme xanthane et de carboxyméthylcellulose dans l'étape (a) étant de 10 à 60 %, préférablement de 20 à 50 %, en poids sec de la composition.

6. Procédé selon l'une quelconque des revendications 1 à 5, la concentration de maltodextrine dans l'étape (a) étant de 40 à 90 %, préférablement de 50 à 80 %, en poids sec de la composition.

7. Procédé selon l'une quelconque des revendications 1 à 6, la concentration du sel de calcium dans l'étape (b) étant de 1 à 10 % en poids sec de la composition.

8. Procédé selon l'une quelconque des revendications 1 à 7, le sel de calcium étant choisi dans le groupe constitué par le lactate de calcium, le propionate de calcium, le citrate de calcium et le chlorure de calcium, préférablement le lactate de calcium.

9. Procédé selon l'une quelconque des revendications 1 à 8, la concentration de maltodextrine dans l'étape (c) étant de 2 à 20 % en poids sec de la composition.

10. Procédé selon l'une quelconque des revendications 1 à 9, 20 à 80 % des particules agglomérées récupérées dans l'étape (d) ayant une taille de particule supérieure à 200 µm, et au moins 90 % des particules agglomérées de l'étape (d) ayant une taille de particule supérieure à 50 µm.

11. Composition d'hydrocolloïde facilement dispersible préparée par le procédé selon l'une quelconque des revendications 1 à 10.

12. Composition selon la revendication 11, un échantillon de 2 % p/p des particules agglomérées dans l'eau ayant une viscosité de 100 à 400 mPa.s à une vitesse de cisaillement de 50 s⁻¹ à 20 °C.

13. Composition selon la revendication 11 ou 12, les particules agglomérées ayant une dispersibilité de 3 ou plus lorsqu'elle est déterminée par un procédé impliquant l'agitation d'un échantillon à 2 % des particules agglomérées dans l'eau en utilisant un agitateur magnétique à 600 ppm pendant 10 secondes et l'évaluation visuelle du degré d'occurrence de grumeaux dans l'eau.

14. Composition selon l'une quelconque des revendications 11 à 13, les particules agglomérées ayant une densité apparente de 20 à 50 g/100 ml.

15. Composition selon l'une quelconque des revendications 11 à 14 pour une utilisation dans la gestion d'une dysphagie.
